# EUROPEAN PATENT SPECIFICATION

(11) **EP 2 521 287 B1**
(45) Date of publication and mention of the grant of the patent: **06.11.2019**
(21) Application number: 10840445.0
(22) Date of filing: 15.11.2010
(51) Int. Cl.: H04B 10/079, H04B 10/272

(54) **DEVICE AND METHOD FOR OBTAINING OPTICAL POWER OF OPTICAL NETWORK UNIT (ONU) IN ONLINE MANNER**
VORRICHTUNG UND VERFAHREN ZUM ONLINE-ERHALT VON OPTISCHER LEISTUNG EINER OPTISCHEN NETZWERKEINHEIT (ONU)
DISPOSITIF ET PROCÉDÉ SE FAIRE COMMUNIQUER EN LIGNE L'ÉNERGIE OPTIQUE D'UNITÉ DE RÉSEAU OPTIQUE

(30) Priority: 30.12.2009 CN 200910244545
(43) Date of publication of application: 07.11.2012
(73) Proprietor: ZTE Corporation, Shenzhen, Guangdong 518057 (CN)
(72) Inventor: FENG, Jing, Guangdong 518057 (CN)
(74) Representative: Novagraaf Technologies
(86) International application number: PCT/CN2010/078725
(87) International publication number: WO 2011/079656

(56) References cited:
- EP-A2- 1 841 097
- CN-A- 1 794 613
- CN-A- 101 013 919
- CN-A- 101 023 606
- CN-A- 101 047 442
- CN-A- 101 127 567
- CN-A- 101 179 332
- CN-A- 101 217 310
- CN-A- 101 291 176
- CN-A- 101 296 039
- CN-A- 101 431 372
- CN-A- 101 431 372
- CN-A- 101 494 497
- CN-A- 101 594 557
- CN-A- 101 621 332
- CN-A- 101 753 207
- CN-A- 101 789 824
- CN-A- 101 795 158
- CN-A- 101 808 253
- JP-A- 2007 221 517
- KR-A- 20050 005 602
- US-A1- 2008 002 973
- US-A1- 2008 056 731
- US-A1- 2009 067 835
- US-A1- 2009 175 619
- US-A1- 2009 175 619

## Description

### Field of the Invention

The present invention relates to an optical power detection technology in an Ethernet Passive Optical Network (EPON) system, and more particularly, to an apparatus and a method for obtaining optical power of an Optical Network Unit (ONU) in an online manner.

### Background of the Invention

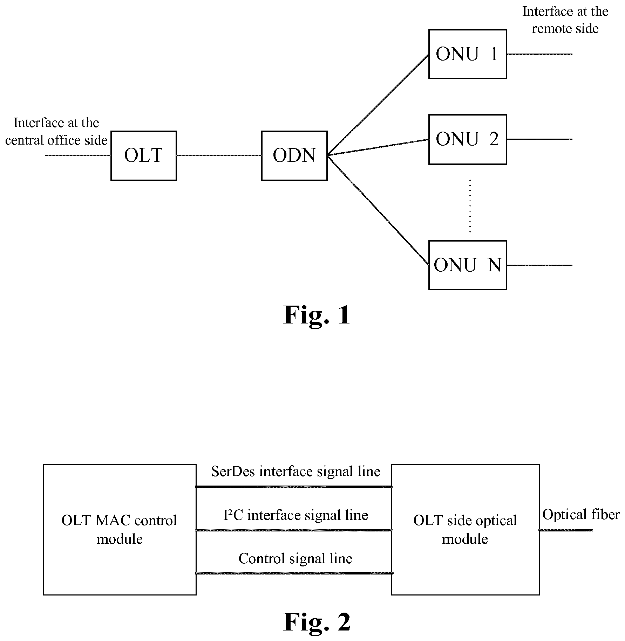

Fig. 1 shows a schematic diagram of a composition structure of an existing EPON system. The EPON system, as a single-fiber double-direction system, is composed of an Optical Line Terminal (OLT) at a central office side, ONUs at a remote side and an Optical Distribution Network (ODN). In a downlink direction, signals sent by the OLT reach each ONU via the ODN. In an uplink direction, signals sent by each ONU can only reach the OLT via the ODN, and can not reach other ONUs. In such a point-to-multipoint architecture of the EPON system, a passive optical splitter is used to avoid usage of any active equipment, thus greatly reducing the installation, management and maintenance costs of the optical network, so that the EPON system can be broadly applied in fields such as Fiber To The Home (FTTH), Fiber To The Building (FTTB) and Fiber To The Premises (FTTP) etc.

In the existing EPON system, the ODN, which is composed of an optical fiber and one or more passive optical apparatuses such as passive optical splitters etc., provides an optical path for data transmission between the OLT and the ONUs. In the EPON system, optical signals can only be transmitted by each ONU within a specified time slot, i.e. the ONU can only transmit optical signals within a time slot distributed to each ONU by the OLT, and optical signals are transmitted by another ONU in a next time slot, wherein the time slots are specifically distributed by an OLT Media Access Control (MAC) control module in the OLT. Generally, a Serializer/Deserializer (SerDes) interface signal line and a two-wire serial bus (Inter -Integrated Circuit, I²C) interface signal line are connected between the OLT MAC control module and an OLT side optical module in the existing OLT, or only the SerDes interface signal line is connected between the two modules, wherein the SerDes interface signal line is configured to transmit communication data between the OLT MAC control module and the OLT side optical module during the running process of the EPON system.

In the EPON system, unlike common continuous optical signals, uplink optical signals are burst signals. The traditional method for acquiring optical power measures an average optical power within a sampling period. Moreover, since the model of the optical module used by the ONU depends on factors such as the optical path distance between the ONU and the OLT, thus the optical power of each ONU in the EPON system cannot be accurately measured by the existing method which measures the average optical power. In other words, the average optical power measured by the existing optical power measuring method cannot really reflect the actual optical power of each ONU, which brings great difficulty to the diagnosis and maintenance of the optical network.

US 2009/175619, CN 101 179 332 and CN 101 431 372 provide related technical solutions; however, the above mentioned problem still remains unsolved.

### Summary of the Invention

In view of the above, the present invention provides an apparatus and a method for obtaining optical power of an ONU in an online manner, so that the optical power of each ONU in the EPON system can be accurately measured in an online manner, so as to facilitate the diagnosis and maintenance of the optical network.

To achieve the purpose above, the technical solution of the present invention is realized as follows.

The present invention provides an apparatus for obtaining optical power of an ONU in an online manner, the apparatus comprises: an OLT side optical module and an OLT MAC control module at an optical cable central office side, wherein a control signal line is set between the OLT MAC control module and the OLT side optical module; wherein
the OLT MAC control module is configured to, during a running process of an EPON system, trigger, via the control signal line, the OLT side optical module to detect optical power of an ONU; and
the OLT side optical module is configured to, during the running process of the EPON system, measure, within a time slot distributed to each ONU by the OLT, the optical power of the corresponding ONU under the trigger of the OLT MAC control module.

Preferably, the OLT side optical module comprises: an optical detector, a preamplifier, a signal shaping circuit, an Analog-to-Digital (AD) conversion circuit, and an Electrically Erasable Programmable Read-Only Memory (E²PROM), wherein
the optical detector is configured to detect and receive an optical signal from an optical fiber link, convert the received optical signal into an optical current signal, and transmit the optical current signal to the preamplifier;
the preamplifier is configured to convert the optical current signal generated by the optical detector into an analog voltage signal, and output the analog voltage signal to the signal shaping circuit;
the signal shaping circuit is configured to shape and filter the analog voltage signal transmitted by the preamplifier, and transmit the analog voltage signal, from which clutters are removed, to the AD conversion circuit;
the AD conversion circuit is configured to, under control of the OLT MAC control module, convert the analog voltage signal transmitted by the signal shaping circuit into a digital signal, convert the digital signal into an optical power value, and store the optical power value in the E²PROM; and
the E²PROM is configured to store the optical power value obtained by conversion of the AD conversion circuit.

Preferably, a Serializer/Deserializer (SerDes) interface signal line and a two-wire serial bus (I²C) interface signal line are connected between the OLT MAC control module and the OLT side optical module.

Preferably, the OLT MAC control module is further configured to, after an optical power value is obtained by an AD conversion circuit, judge whether or not transmission of an optical signal of the ONU has been ended, and when it is judged that the transmission of the optical signal of the ONU has not been ended, read an optical power value in an E2PROM via the I²C interface signal line;
correspondingly, the AD conversion circuit is further configured to notify the OLT MAC control module after obtaining the optical power value of the ONU.

The present invention also provides a method for obtaining optical power of an ONU in an online manner, a control signal line is set between an OLT MAC control module and an OLT side optical module, and the method further comprises:
during a running process of an EPON system, the OLT MAC control module controlling, via the control signal line, the OLT side optical module to measure, within a time slot distributed to each ONU by the OLT, optical power of the ONU.

Preferably, the step of measuring the optical power of the ONU comprises:
the OLT side optical module converting an optical signal transmitted by the ONU into an optical current signal first, then converting the optical current signal into an analog voltage signal, shaping and filtering the analog voltage signal and transmitting the analog voltage signal to an AD conversion circuit after removing clutters from the analog voltage signal; after being triggered by the OLT MAC control module, the AD conversion circuit beginning to convert the analog voltage signal into a digital signal, then converting the digital signal into an optical power value, and storing the optical power value in an E²PROM.

Preferably, the length of the time slot distributed to the ONU by the OLT is required to be longer than a time required by the AD conversion circuit to perform AD conversion.

Preferably, a SerDes interface signal line and an I²C interface signal line are further set between the OLT MAC control module and the OLT side optical module.

Preferably, the method further comprises:
after detection of the optical power of the ONU is completed, the OLT judging whether or not transmission of an optical signal of the ONU has been ended, and when it is judged that the transmission of the optical signal has not been ended, the OLT MAC control module reading an optical power value in an E2PROM via the I²C interface signal line.

In accordance with the apparatus and the method for obtaining optical power of an ONU in an online manner provided by the present invention, a control signal line is set between an OLT MAC control module and an OLT side optical module, during the running process of an EPON system, the OLT MAC control module controls, via the control signal line, the OLT side optical module to measure, within a time slot distributed to each ONU by the OLT, the optical power of the ONU. In the present invention, the optical power is detected within the time slot distributed to the ONU by the OLT to achieve the purpose of online detection without influencing the normal communication between the OLT and the ONU. In addition, the optical power of the corresponding ONU can be measured by the OLT within a time slot distributed to each ONU, so that the OLT can measure each ONU corresponding to the OLT in an online manner.

The present invention, which can be realized by simply adding a control signal line between an OLT MAC control module and an OLT side optical module, is simple in design. In addition, an idle pin on the original Small Form-factor Pluggable (SFP) packaged OLT side optical module can be used as an interface of the control signal. Whether the idle pin is used is determined according to actual requirements during actual applications, and an OLT side hardware circuit does not need to be redesigned, thus the design cost is low.

### Brief Description of the Drawings

Fig. 1 is a schematic diagram illustrating a composition structure of an existing EPON system;
Fig. 2 is a structural schematic diagram illustrating an apparatus for obtaining optical power of an ONU in an online manner in accordance with an embodiment of the present invention;
Fig. 3 is a schematic diagram illustrating an internal structure of an OLT side optical module;
Fig. 4 is a schematic diagram illustrating a process for realizing a method for obtaining optical power of an ONU in an online manner in accordance with an embodiment of the present invention;
Fig. 5 is a schematic diagram illustrating an implementation process in accordance with an embodiment of the present invention.

### Detailed Description of the Embodiments

The basic idea of the embodiments of the present invention is that: a control signal line is set between an OLT MAC control module and an OLT side optical module, during the running process of an EPON system, the OLT MAC control module controls, via the control signal line, the OLT side optical module to measure, within a time slot distributed to each ONU by the OLT, the optical power of the ONU.

In the embodiments of the present invention, it is assumed that a SerDes interface signal line and an I²C interface signal line have been provided between the OLT MAC control module and the OLT side optical module.

The present invention is further described hereinafter in details with reference to the attached drawings and embodiments.

Fig. 2 is a structural diagram illustrating an apparatus for obtaining optical power of an ONU in an online manner in accordance with an embodiment of the present invention. As shown in Fig. 2, the apparatus comprises: an OLT MAC control module and an OLT side optical module, and three connection lines, i.e. a SerDes interface signal line, an I²C interface signal line and a control signal line are connected between the OLT MAC control module and the OLT side optical module, wherein
the OLT MAC control module is configured to, during the running process of an EPON system, trigger, via the control signal line, the OLT side optical module to detect optical power;
the OLT side optical module is configured to, during the running process of the EPON system, measure, within a time slot distributed to each ONU by the OLT, the optical power of the corresponding ONU under the trigger of the OLT MAC control module.

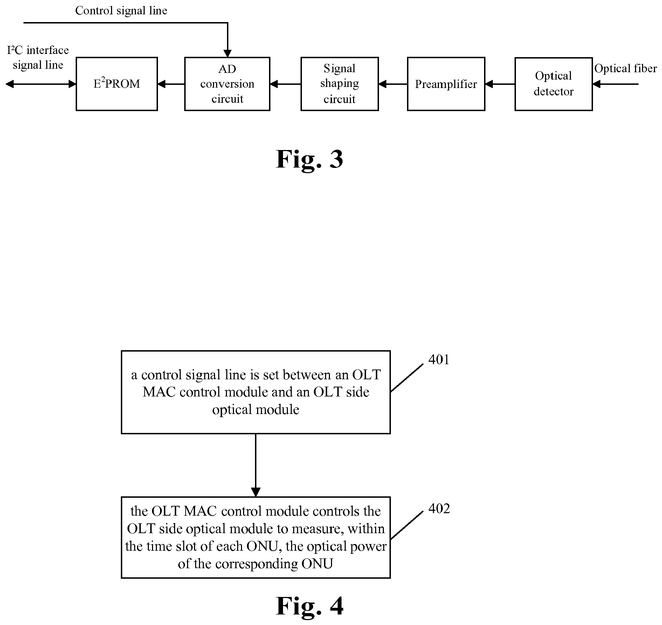

Fig. 3 is a schematic diagram illustrating the internal structure of an OLT side optical module. As shown in Fig. 3, the OLT side optical module comprises: an optical detector, a preamplifier, a signal shaping circuit, an AD conversion circuit, and an E²PROM, wherein
the optical detector is configured to detect and receive an optical signal from an optical fiber link, convert the received optical signal into an optical current signal and transmit the optical current signal to the preamplifier;
the preamplifier is configured to convert the optical current signal generated by the optical detector into an analog voltage signal, and output the analog voltage signal to the signal shaping circuit;
the signal shaping circuit is configured to shape and filter the analog voltage signal transmitted by the preamplifier, and transmit the analog voltage signal, from which clutters are removed, to the AD conversion circuit;
the AD conversion circuit is configured to, under the control of the OLT MAC control module, convert the analog voltage signal transmitted by the signal shaping circuit into a digital signal, and then convert the digital signal into an optical power value and store the optical power value in the E²PROM; and
the E²PROM is configured to store the optical power value obtained by the conversion of the AD conversion circuit.

The OLT MAC control module is further configured to, after the optical power value is obtained by the AD conversion circuit, judge whether or not transmission of the optical signal of the ONU has been ended, and when it is judged that the transmission of the optical signal of the ONU has not been ended, read the optical power value in the E²PROM via the I²C interface signal line; accordingly,
the AD conversion circuit is further configured to, after obtaining the optical power value of the ONU, notify the OLT MAC control module.

Fig. 4 is a schematic diagram illustrating a process for realizing a method for obtaining optical power of an ONU in an online manner in accordance with an embodiment of the present invention. As shown in Fig. 4, steps for realizing the process are specifically as follows.

Step 401: a control signal line is set between an OLT MAC control module and an OLT side optical module;
wherein two connection lines, i.e. a SerDes interface signal line and an I²C interface signal line have been provided between the OLT MAC control module and the OLT side optical module, and a control signal line is set between the OLT MAC control module and the OLT side optical module in the embodiment of the present invention.

Here, definitions of pins of an SFP-packaged OLT side optical module meet the standards of the SFP Multisource Agreement (MSA). Among these pins, the definition of the No. 7 pin is rate-selection, however, this pin is not needed by the existing OLT side optical module. Therefore, the idle No. 7 pin can be taken as an interface of the control signal in the embodiment of the present invention. In this case, the No. 7 pin in the SFP-packaged OLT side optical module will not be used if the optical power of the ONU does not need to be obtained in an on line manner. If the optical power of the ONU needs to be obtained in an on line manner, the No. 7 pin in the SFP-packaged OLT side optical module is taken as the interface of the control signal, and a control signal line is added. Herein, other idle pins in the OLT side optical module may also be adopted. The pins in the OLT side optical module can be redefined and the No. 7 pin is an optimal application solution of the embodiment of the present invention. In addition, the OLT side optical module may not even be packaged by the SFP. Generally, the OLT side optical module may is packaged by the SFP.

The OLT side optical module which supports online acquisition of optical power of an ONU in the embodiments of the present invention can be triggered to perform detection by only adding a control signal line on the basis of the existing OLT side optical module which does not support online acquisition of optical power of an ONU. During practical applications, whether or not the No. 7 pin will be chosen and used is determined according to the actual requirements, thus avoiding redesign of an OLT side hardware circuit. Therefore, the present invention can be realized in a simple manner with low cost.

Step 402: during the running process of an EPON system, the OLT MAC control module controls, via the control signal line, the OLT side optical module to measure, within a time slot distributed to each ONU by the OLT, the optical power of the corresponding ONU.

This step specifically comprises: during the running process of an EPON system, the OLT MAC control module controls, via the control signal line, the AD conversion circuit in the OLT side optical module to measure, within a time slot distributed to each ONU by the OLT, the optical power of the ONU.

The whole optical power measurement process comprises: the OLT side optical module converts an optical signal transmitted by the ONU into an optical current signal first, and then converts the optical current signal into an analog voltage signal, shapes and filters the analog voltage signal and transmits the analog voltage signal to an AD conversion circuit after removing clutters from the analog voltage signal; after being triggered by the OLT MAC control module, the AD conversion circuit begins to convert the analog voltage signal into a digital signal, and then converts the digital signal into an optical power value, and stores the optical power value in an E²PROM.

Here, the optical power value stored in the E²PROM is the optical power value of the corresponding ONU currently obtained by the OLT. In other words, when the obtained optical power value is stored in the E²PROM, the optical power value stored in the E²PROM last time is covered.

In the above, the AD conversion circuit is triggered, by the OLT MAC control module, to begin to measure the optical power of the ONU. In other words, the starting time of the AD conversion is controlled by the OLT MAC control module, so that the OLT MAC control module is able learn which ONU transmits the optical signal whose optical power has been measured. The time required by the AD conversion is T_{c}, also referred to as the sampling time of the AD conversion circuit. T_{c} has been determined before the OLT side optical module leaves the factory, and can be stored in the E²PROM in the OLT side optical module.

Here, the detection of the optical power must be completed within the time slot distributed to the ONU by the OLT. If the optical power is detected beyond the time slot, the obtained detection result is inaccurate, because the optical power will be detected in the time slot distributed to another ONU by the OLT if the optical power is detected beyond the time slot distributed to the ONU by the OLT. The time slot distributed by the OLT to the ONU is expressed as Tₒₙᵤ, then T_{c} must be smaller than Tₒₙᵤ. In addition, because of the Round-Trip Time (RTT), T_{c} must be smaller than Tₒₙᵤ-RTT, i.e. T_{c} < Tₒₙᵤ-RTT. In this way, the accuracy of the ONU optical power detected by the OLT can be ensured.

Further, after the detection of the optical power of the ONU is completed, the OLT judges whether or not transmission of the optical signal of the ONU has been ended. When it is judged that the transmission of the optical signal has not been ended, it means that the detection of the optical power is successful, and the OLT MAC control module can read the optical power value in the E²PROM via the I²C interface signal line. When it is judged that the transmission of the optical signal has been ended, i.e. Tₒₙᵤ-RTT<T_{c}, then the result obtained by the optical power detection is inaccurate.

The embodiments of the present invention detect the optical power within the time slot distributed to the ONU by the OLT to achieve the purpose of online detection without influencing the normal communication between the OLT and the ONU. In addition, the optical power of the corresponding ONU can be measured within a time slot distributed to each ONU by the OLT, so that each corresponding ONU can be measured in an online manner by the OLT.

The present invention is further described hereinafter in details with reference to an embodiment.

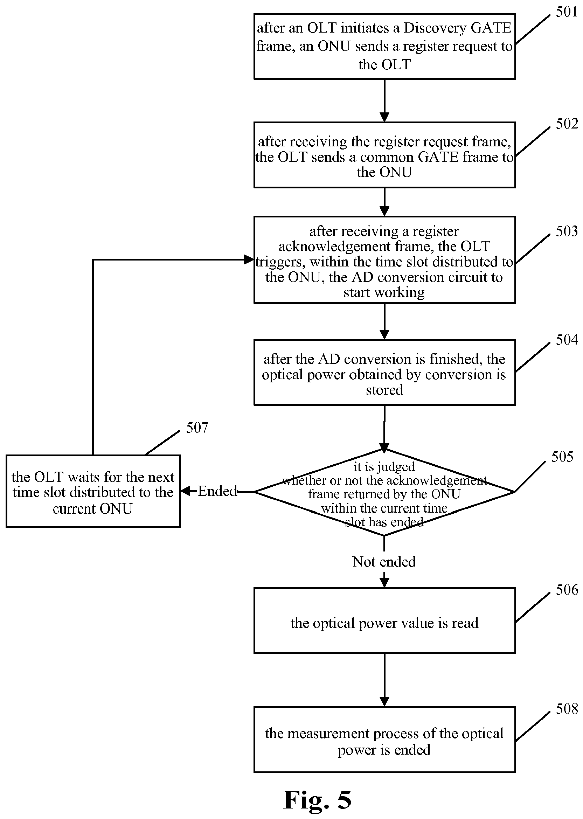

A control signal line is set between an OLT MAC control module and an OLT side optical module. Fig. 5 is a schematic diagram illustrating an implementing process in accordance with the embodiment of the present invention. As shown in Fig. 5, steps for implementing the process are specifically as follows.

Step 501: after a Discovery GATE frame is initiated by an OLT, an ONU sends a register request to the OLT.

Specifically, the process comprises: the OLT sends a Discovery GATE frame to each ONU, an unregistered ONU will respond to the Discovery GATE frame, i.e. the unregistered ONU returns a register request frame REGISTER_REQ to the OLT.

Step 502: after receiving the register request frame, the OLT sends a common GATE frame to the ONU.

Specifically, the process comprises: after receiving the register request frame REGISTER REQ sent by the ONU, the OLT transmits a common GATE frame to the ONU which requests register, wherein the common GATE frame comprises a time slot distributed to the ONU by the OLT, and a unique Logical Link Identifier (LLID) distributed to the ONU. After receiving the common GATE frame, the ONU returns a register acknowledgement frame REGISTER ACK to the OLT to acknowledge to the OLT that the ONU side registration is successful.

Here, the OLT not only distributes the time slot for the ONU by sending the common GATE frame during the register process of the ONU, but also distributes the time slot for the ONU by sending the common GATE frame during the normal communication process. The time slots distributed each time can be the same or different, and the durations of the time slots are controlled by the OLT MAC control module. The OLT can measure the optical power of an ONU in any time slot after the ONU is registered. During the communication process, after the OLT determines that the acknowledgement frame returned by the ONU has ended, it means that the communication between the OLT and the ONU in the current time slot is finished, in other words, the ONU will not transmit any optical signal within the time slot any more.

Step 503: after receiving the register acknowledgement frame, the OLT triggers, within the time slot distributed to the ONU, the AD conversion circuit to start working.

Specifically, the process comprises: after the OLT receives the register acknowledgement frame REGISTER ACK returned by the ONU, the OLT MAC control module in the OLT triggers, within the time slot distributed to the ONU by the OLT, the AD conversion circuit in the OLT side optical module to start working via the control signal line connected with the OLT side optical module. In the process, at the moment when the OLT receives the register acknowledgement frame REGISTER ACK returned by the ONU, the OLT begins to trigger the AD conversion circuit to start working until the register acknowledgement frame REGISTER ACK returned by the ONU ends. In other words, the OLT side optical module must measure the optical power of the ONU within the register acknowledgement frame REGISTER ACK returned by the ONU.

Here, the OLT measures, in the time slot authorized by the common GATE frame sent by the OLT, the optical power of the ONU during the normal communication process after the ONU has been registered. In addition, the OLT may also measure, in the time slot authorized by the common GATE frame, the optical power of the ONU in the register process of the ONU.

Step 504: after the AD conversion is finished, the optical power obtained by conversion is stored.

Specifically, the process comprises: after the AD conversion performed by the AD conversion circuit in the OLT side optical module is finished, the obtained result is stored in the E²PROM in the OLT side optical module.

Step 505: the OLT judges whether or not the acknowledgement frame returned by the ONU within the current time slot has ended, if it has not ended, Step 506 is performed, if it has ended, Step 507 is performed.

Specifically, the process comprises: the OLT MAC control module in the OLT judges whether or not the acknowledgement frame REGISTER ACK returned by the ONU has ended, if it has not ended, Step 506 is performed, if it has ended, Step 507 is performed.

Here, if the acknowledgement frame REGISTER ACK returned by the ONU has ended, it means that the time slot distributed to the ONU by the OLT Tₒₙᵤ-RTT is smaller than T_{c}, therefore, the measured and obtained optical power value is inaccurate.

Step 506: the optical power value is read, and then Step 508 is performed.

Specifically, the process comprises: the OLT MAC control module reads the optical power value of the ONU stored in the E²PROM via the control signal line connected with the OLT side optical module, and then Step 508 is performed.

Step 507: the OLT waits for the next time slot distributed to the current ONU, and returns to Step 503.

Here, the next time slot is a time slot distributed to the ONU by the OLT over again during the subsequent normal communication process. The OLT continues to measure the optical power of the ONU after the next time slot reaches.

Step 508: the measurement process of the optical power is ended.

The above are only the preferable embodiments of the present invention and not intended to limit the scope of protection of the present invention, and any modifications, equivalent replacements, improvements and the like within the principle of the invention shall fall within the scope of protection of the present invention.

## Claims

1. An apparatus for measuring optical power of an Optical Network Unit, ONU, in an online manner comprising:
an Optical Line Terminal -OLT- side optical module, and
an OLT Media Access Control -MAC- control module at an optical cable central office side,
wherein the online manner refers to the normal connection of services between ONU and the OLT;
**characterized in that**
a control signal line is set between the OLT MAC control module and the OLT side optical module;
and wherein
the OLT MAC control module is configured to, during a running process of an Ethernet Passive Optical Network -EPON- system, trigger, via the control signal line, the OLT side optical module to measure optical power of an ONU; and
the OLT side optical module is configured to, during the running process of the EPON system, measure, within a time slot distributed to each ONU by the OLT, the optical power of the corresponding ONU under the trigger of the OLT MAC control module;
wherein a Serializer/Deserializer -SerDes- interface signal line and a two-wire serial bus -I²C- interface signal line are set between the OLT MAC control module and the OLT side optical module;
wherein the OLT MAC control module is further configured to, after an optical power value is obtained by an Analog-to-Digital -AD-conversion circuit, judge whether or not transmission of an optical signal of the ONU has been ended, and when it is judged that the transmission of the optical signal of the ONU has not been ended, read an optical power value in an E2PROM via the I²C interface signal line.

2. The apparatus for measuring optical power of an ONU according to claim 1, **characterized in that** the OLT side optical module comprises: an optical detector, a preamplifier, a signal shaping circuit, an Analog-to-Digital -AD- conversion circuit, and an Electrically Erasable Programmable Read-Only Memory -E2PROM-, wherein
the optical detector is configured to detect and receive an optical signal from an optical fiber link, convert the received optical signal into an optical current signal, and transmit the optical current signal to the preamplifier;
the preamplifier is configured to convert the optical current signal generated by the optical detector into an analog voltage signal, and output the analog voltage signal to the signal shaping circuit;
the signal shaping circuit is configured to shape and filter the analog voltage signal transmitted by the preamplifier, and transmit the analog voltage signal, from which clutters are removed, to the AD conversion circuit;
the AD conversion circuit is configured to, under control of the OLT MAC control module, convert the analog voltage signal transmitted by the signal shaping circuit into a digital signal, convert the digital signal into an optical power value, and store the optical power value in the E2PROM; and
the E2PROM is configured to store the optical power value obtained by conversion of the AD conversion circuit,
correspondingly the AD conversion circuit is further configured to notify the OLT MAC control module after obtaining the optical power value.

3. A method for measuring optical power of an Optical Network Unit, ONU, in an online manner, comprising
setting a control signal line between an OLT Media Access Control -MAC-control module and an Optical Line Terminal -OLT- side optical module (401), and the method further comprising:
controlling by the OLT MAC control module, via the control signal line, , the OLT side optical module to measure, within a time slot distributed to each ONU by the OLT, optical power of the ONU (402), during a running process of an Ethernet Passive Optical Network -EPON- system;
wherein the online manner refers to the normal connection of services between ONU and the OLT;
wherein a Serializer/Deserializer -SerDes- interface signal line and an two-wire serial bus -I²C- interface signal line are further set between the OLT MAC control module and the OLT side optical module;
wherein after detection of the optical power of the ONU is completed, the OLT judging whether or not transmission of an optical signal of the ONU has been ended, and when it is judged that the transmission of the optical signal has not been ended, the OLT MAC control module reading an optical power value in an E2PROM via the I²C interface signal line.

4. The method for measuring optical power of an ONU according to claim 3, **characterized in that** the step of measuring the optical power of the ONU comprises:
the OLT side optical module converting an optical signal transmitted by the ONU into an optical current signal first, then converting the optical current signal into an analog voltage signal, shaping and filtering the analog voltage signal and transmitting the analog voltage signal to an Analog-to-Digital -AD- conversion circuit after removing clutters from the analog voltage signal; after being triggered by the OLT MAC control module, the AD conversion circuit converting the analog voltage signal into a digital signal, converting the digital signal into an optical power value, and storing the optical power value in an Electrically Erasable Programmable Read-Only Memory -E2PROM.

5. The method for measuring optical power of an ONU according to claim 4, **characterized in that** the length of the time slot distributed to the ONU by the OLT is required to be longer than a time required by the AD conversion circuit to perform AD conversion.

## Patentansprüche

1. Vorrichtung zum Online-Messen von optischer Leistung einer Optical Network Unit, ONU, umfassend:
ein optisches Modul auf Seite eines Optical Line Terminals, OLT, und
ein OLT Media Access Control-, MAC, Steuermodul auf Seite einer optischen Kabelzentrale,
wobei sich Online auf die normale Verbindung von Diensten zwischen ONU und dem OLT bezieht;
**dadurch gekennzeichnet, dass**
eine Steuersignalleitung zwischen dem OLT MAC-Steuermodul und dem OLT-seitigen optischen Modul eingerichtet wird;
und wobei
das OLT MAC-Steuermodul dazu konfiguriert ist, während eines laufenden Prozesses eines Ethernet Passive Optical Network-, EPON, Systems das OLT-seitige optische Modul über die Steuersignalleitung dazu zu triggern, optische Leistung einer ONU zu messen; und
das OLT-seitige optische Modul dazu konfiguriert ist, während des laufenden Prozesses des EPON-Systems innerhalb eines Zeitschlitzes, der vom OLT an jede ONU verteilt wird, die optische Leistung der entsprechenden ONU unter dem Trigger des OLT MAC-Steuermoduls zu messen;
wobei eine Serializer/Deserializer-, SerDes, Schnittstellensignalleitung und eine Zweidraht-Serial Bus-, I²C, Schnittstellensignalleitung zwischen dem OLT MAC-Steuermodul und dem OLT-seitigen optischen Modul eingerichtet werden;
wobei das OLT MAC-Steuermodul weiter dazu konfiguriert ist, nachdem ein optischer Leistungswert durch eine Analog-zu-Digital-, AD, Wandlerschaltung erhalten wird, zu beurteilen, ob Übertragung eines optischen Signals der ONU beendet wurde oder nicht, und wenn geurteilt wird, dass die Übertragung des optischen Signals der ONU nicht beendet wurde, einen optischen Leistungswert in einem E2PROM über die I²C-Schnittstellensignalleitung auszulesen.

2. Vorrichtung zum Messen von optischer Leistung einer ONU nach Anspruch 1, **dadurch gekennzeichnet, dass** das OLT-seitige optische Modul umfasst: einen optischen Detektor, einen Vorverstärker, eine Signalformungsschaltung, eine Analog-zu-Digital-, AD, Wandlerschaltung, und einen Electrically Erasable Programmable Read-Only Memory, E2PROM, wobei
der optische Detektor dazu konfiguriert ist, ein optisches Signal von einer optischen Faserverbindung zu detektieren und zu empfangen, das empfangene optische Signal in ein optisches Stromsignal umzuwandeln, und das optische Stromsignal an den Vorverstärker zu übertragen;
der Vorverstärker dazu konfiguriert ist, das vom optischen Detektor erzeugte optische Stromsignal in ein analoges Spannungssignal umzuwandeln, und das analoge Spannungssignal an die Signalformungsschaltung auszugeben;
die Signalformungsschaltung dazu konfiguriert ist, das vom Vorverstärker übertragene analoge Spannungssignal zu formen und zu filtern, und das analoge Spannungssignal, aus dem Störungen entfernt sind, an die AD-Wandlerschaltung zu übertragen;
die AD-Wandlerschaltung dazu konfiguriert ist, unter Steuerung des OLT MAC-Steuermoduls das von der Signalformungsschaltung übertragene analoge Spannungssignal in ein digitales Signal umzuwandeln, das digitale Signal in einen optischen Leistungswert umzuwandeln, und den optischen Leistungswert im E2PROM zu speichern; und
der E2PROM dazu konfiguriert ist, den durch Umwandlung der AD-Wandlerschaltung erhaltenen optischen Leistungswert zu speichern,
dementsprechend die AD-Wandlerschaltung weiter dazu konfiguriert ist, nach Erhalten des optischen Leistungswert das OLT MAC-Steuermodul zu benachrichtigen.

3. Verfahren zum Online-Messen von optischer Leistung einer Optical Network Unit, ONU, umfassend
Einrichten einer Steuersignalleitung zwischen einem OLT Media Access Control-, MAC, Steuermodul und einem Optical Line Terminal-, OLT, seitigen optischen Modul (401), und wobei das Verfahren weiter umfasst:
Steuern des OLT-seitigen optischen Moduls durch das OLT MAC-Steuermodul über die Steuersignalleitung so, dass innerhalb eines Zeitschlitzes, der vom OLT an jede ONU verteilt wird, optische Leistung der ONU (402) während eines laufenden Prozesses eines Ethernet Passive Optical Network-, EPON-Systems gemessen wird;
wobei sich Online auf die normale Verbindung von Diensten zwischen ONU und dem OLT bezieht;
wobei weiter eine Serializer/Deserializer-, SerDes, Schnittstellensignalleitung und eine Zweidraht-Serial Bus-, I²C, Schnittstellensignalleitung zwischen dem OLT MAC-Steuermodul und dem OLT-seitigen optischen Modul eingerichtet werden;
wobei, nachdem das Detektieren der optischen Leistung der ONU abgeschlossen ist, das OLT beurteilt, ob Übertragung eines optischen Signals der ONU beendet wurde oder nicht, und wenn geurteilt wird, dass die Übertragung des optischen Signals nicht beendet wurde, das OLT MAC-Steuermodul einen optischen Leistungswert in einem E2PROM über die I²C-Schnittstellensignalleitung ausliest.

4. Verfahren zum Messen von optischer Leistung einer ONU nach Anspruch 3, **dadurch gekennzeichnet, dass** der Schritt des Messens der optischen Leistung der ONU umfasst:
zuerst Umwandeln, durch das OLT-seitige optische Modul, eines von der ONU übertragenen optischen Signals in ein optisches Stromsignal, dann Umwandeln des optischen Stromsignals in ein analoges Spannungssignal, Formen und Filtern des analogen Spannungssignals und Übertragen des analogen Spannungssignals an eine Analog-zu-Digital-, AD, Wandlerschaltung nach Entfernen von Störungen aus dem analogen Spannungssignal; Umwandeln, durch die AD-Wandlerschaltung, nachdem dieselbe vom OLT MAC-Steuermodul getriggert wurde, des analogen Spannungssignals in ein digitales Signal, Umwandeln des digitalen Signals in einen optischen Leistungswert, und Speichern des optischen Leistungswerts in einem Electrically Erasable Programmable Read-Only Memory, E2PROM.

5. Verfahren zum Messen von optischer Leistung einer ONU nach Anspruch 4, **dadurch gekennzeichnet, dass** die Länge des Zeitschlitzes, der vom OLT an die ONU verteilt wird, länger sein muss als eine Zeit, die von der AD-Wandlerschaltung benötigt wird, um AD-Umwandlung durchzuführen.

## Revendications

1. Appareil permettant de mesurer une puissance optique d'une unité de réseau optique, ONU, d'une manière en ligne, comprenant :
un module optique côté terminal de ligne optique, OLT, et
un module de commande de commande d'accès au support, MAC, OLT au niveau d'un côté central de câbles optiques,
dans lequel la manière en ligne se réfère à la connexion normale de services entre l'ONU et l'OLT ;
**caractérisé en ce que**
une ligne de signal de commande est établie entre le module de commande MAC OLT et le module optique côté OLT ;
et dans lequel
le module de commande MAC OLT est configuré pour, pendant un procédé de fonctionnement d'un système de réseau optique passif Ethernet, EPON, déclencher, via la ligne de signal de commande, le module optique côté OLT pour mesurer une puissance optique d'une ONU ; et
le module optique côté OLT est configuré pour, pendant le procédé de fonctionnement du système EPON, mesurer, dans un intervalle de temps distribué à chaque ONU par l'OLT, la puissance optique de l'ONU correspondante sous le déclenchement du module de commande MAC OLT ;
dans lequel une ligne de signal d'interface de sérialiseur/désérialiseur, SerDes, et une ligne de signal d'interface de bus sériel à deux fils, I²C, sont établies entre le module de commande MAC OLT et le module optique côté OLT ;
dans lequel le module de commande MAC OLT est en outre configuré pour, après qu'une valeur de puissance optique a été obtenue par un circuit de conversion analogique-numérique, AD, juger si oui ou non une transmission d'un signal optique de l'ONU a été terminée, et lorsqu'il est jugé que la transmission du signal optique de l'ONU n'a pas été terminée, lire une valeur de puissance optique dans une E2PROM via la ligne de signal d'interface I²C.

2. Appareil permettant de mesurer une puissance optique d'une ONU selon la revendication 1, **caractérisé en ce que** le module optique côté OLT comprend : un détecteur optique, un préamplificateur, un circuit de mise en forme de signal, un circuit de conversion analogique-numérique, AD, et une mémoire morte programmable effaçable électriquement, E2PROM, dans lequel
le détecteur optique est configuré pour détecter et recevoir un signal optique à partir d'une liaison à fibres optiques, convertir le signal optique reçu en signal de courant optique, et transmettre le signal de courant optique au préamplificateur ;
le préamplificateur est configuré pour convertir le signal de courant optique généré par le détecteur optique en signal de tension analogique, et émettre le signal de tension analogique vers le circuit de mise en forme de signal ;
le circuit de mise en forme de signal est configuré pour mettre en forme et filtrer le signal de tension analogique transmis par le préamplificateur, et transmettre le signal de tension analogique, duquel du fouillis est éliminé, au circuit de conversion AD ;
le circuit de conversion AD est configuré pour, sous la commande du module de commande MAC OLT, convertir le signal de tension analogique transmis par le circuit de mise en forme de signal en signal numérique, convertir le signal numérique en valeur de puissance optique, et stocker la valeur de puissance optique dans l'E2PROM ; et
l'E2PROM est configurée pour stocker la valeur de puissance optique obtenue par conversion du circuit de conversion AD,
de manière correspondante le circuit de conversion AD est en outre configuré pour notifier le module de commande MAC OLT après une obtention de la valeur de puissance optique.

3. Procédé permettant de mesurer une puissance optique d'une unité de réseau optique, ONU, d'une manière en ligne, comprenant
l'établissement d'une ligne de signal de commande entre un module de commande de commande d'accès au support, MAC, OLT et un module optique côté terminal de ligne optique, OLT, (401), et le procédé comprenant en outre :
la commande par le module de commande MAC OLT, via la ligne de signal de commande, du module optique côté OLT pour mesurer, dans un intervalle de temps distribué à chaque ONU par l'OLT, une puissance optique de l'ONU (402), pendant un procédé de fonctionnement d'un système de réseau optique passif Ethernet, EPON ;
dans lequel la manière en ligne se réfère à la connexion normale de services entre l'ONU et l'OLT ;
dans lequel une ligne de signal d'interface de sérialiseur/désérialiseur, SerDes, et une ligne de signal d'interface de bus sériel à deux fils, I²C, sont en outre établies entre le module de commande MAC OLT et le module optique côté OLT ;
dans lequel après qu'une détection de la puissance optique de l'ONU a été achevée, l'OLT juge si oui ou non une transmission d'un signal optique de l'ONU a été terminée, et lorsqu'il est jugé que la transmission du signal optique n'a pas été terminée, le module de commande MAC OLT lit une valeur de puissance optique dans une E2PROM via la ligne de signal d'interface I²C.

4. Procédé permettant de mesurer une puissance optique d'une ONU selon la revendication 3, **caractérisé en ce que** l'étape consistant à mesurer la puissance optique de l'ONU comprend :
tout d'abord la conversion d'un signal optique transmis par l'ONU en signal de courant optique, puis la conversion du signal de courant optique en signal de tension analogique, la mise en forme et le filtrage du signal de tension analogique et la transmission du signal de tension analogique à un circuit de conversion analogique-numérique, AD, après l'élimination du fouillis du signal de tension analogique, par le module optique côté OLT ; la conversion du signal de tension analogique en signal numérique, la conversion du signal numérique en valeur de puissance optique, et le stockage de la valeur de puissance optique dans une mémoire morte programmable effaçable électriquement, E2PROM, par le circuit de conversion AD après avoir été déclenché par le module de commande MAC OLT.

5. Procédé permettant de mesurer une puissance optique d'une ONU selon la revendication 4, **caractérisé en ce que** la longueur de l'intervalle de temps distribué à l'ONU par l'OLT doit être plus longue qu'un temps nécessaire au circuit de conversion AD pour mettre en œuvre une conversion AD.
